# EUROPEAN PATENT SPECIFICATION

(11) **EP 3 282 764 B1**
(45) Date of publication and mention of the grant of the patent: **06.05.2020**
(21) Application number: 16183560.8
(22) Date of filing: 10.08.2016
(51) Int. Cl.: H04W 36/02, H04W 36/32

(54) **A COMMUNICATION SYSTEM FOR A LINEAR CELLULAR NETWORK**
KOMMUNIKATIONSSYSTEM FÜR EIN LINEARES ZELLULARES NETZWERK
SYSTÈME DE COMMUNICATION POUR RÉSEAU CELLULAIRE LINÉAIRE

(43) Date of publication of application: 14.02.2018
(73) Proprietor: Kontron Transportation Austria AG, 1120 Wien (AT)
(72) Inventor: GRUET, Christophe, 78180 Montigny le Bretonneux (FR); JACQUES, Roger, 78320 Lévis Saint Nom (FR); BOTET, Gil, 78180 Montigny-le-Bretonneux (FR)
(74) Representative: Weiser, Andreas

(56) References cited:
- WO-A1-96/19087
- CN-A- 102 387 556
- XIA Y ET AL: "Coordinated of multi-point and bi-casting joint soft handover scheme for high-speed rail", IET COMMUNICATIONS, vol. 8, no. 14, 25 September 2014 (2014-09-25), pages 2509-2515, XP002766594, INSTITUTION OF ENGINEERING AND TECHNOLOGY USA DOI: 10.1049/IET-COM.2013.1017
- JONG-HYUN KIM ET AL: "A New RBC handover scheme for LTE-R system", JOURNAL OF INTERNATIONAL COUNCIL ON ELECTRICAL ENGINEERING, vol. 4, no. 3, 10 July 2014 (2014-07-10), pages 245-250, XP055340788, ISSN: 2234-8972, DOI: 10.5370/JICEE.2014.4.3.245

## Description

The present invention relates to a communication system comprising a first and a second node of a linear cellular network.

A cellular network comprises a plurality of radio transceivers or "nodes", through which users can gain access to the network by means of user terminals. For example, in cellular networks according to the LTE standard, a node is referred to as "eNB" (evolved Node B). Each node comprises an antenna and defines a cell, which is delimited by the coverage area of the antenna, which depends on parameters such as node transmit power, user terminal transmit power and service required at the cell edge. If a user terminal is within the coverage area of a node, it can wirelessly communicate with the node by sending and receiving data to and from the node.

The term "antenna" as used herein designates not only a single physical antenna but also entire antenna systems, i.e., comprising one or more physical transmit and/or receive antennas, as required.

A linear network is constructed by continuously aligning nodes so that their respective coverage areas overlap partially, which makes continuous communications from one node to another possible. Such linear networks are, e.g., deployed along railway tracks, highways, tunnels et cet. When a user terminal is located within the coverage area of one node ("source node") and moves to the direction of a neighbouring node ("target node"), a handover procedure is initiated when the user terminal enters the overlap area, in which communication with the source node as well as with the target node is possible. The handover procedure has to be completed while the user terminal is within the handover area. Otherwise, the communication is interrupted.

Since the user terminals in linear networks tend to move at a very fast speed, the time available for a handover is very small, because a user terminal is in the handover area only for a small amount of time. This poses a grave problem, because data communicated over the linear network may be important control data of trains or vehicles carrying the user terminals and thus be critical for the safety of such a transportation system. Even a partial loss of communication can result in a failure of the entire transportation system, potentially causing major accidents.

WO 96/19087 shows a cellular network in which one base transceiver station is located inside a tunnel and another base transceiver station is located outside of the tunnel. Since the coverage area of the first base transceiver station and the coverage area of the second base transceiver station overlap only in a very small area, a repeater of the second base transceiver station is located inside the tunnel. In this setup, additional hardware has to be employed in the field to artificially enhance the coverage area of the second base transceiver station.

It is an object of the invention to create a linear cellular network system in which more stable handover procedures can be performed.

To this end, in a first aspect the invention provides for a system comprising a first and a second node of a linear cellular network, the first node having a first antenna for wirelessly communicating with a user terminal located within a first coverage area of the first node, and the second node having a second antenna for wirelessly communicating with a user terminal located within a second coverage area of the second node, wherein the first and the second coverage area overlap partially to create an overlap area,
wherein both nodes are configured to communicate over a downlink communication channel having a plurality of channel resources,
wherein a scheduler of the first node is configured to allocate a first subset of all available channel resources of the downlink communication channel for communicating data over the first antenna,
wherein a scheduler of the second node is configured to allocate a second subset comprising the remaining available channel resources of the downlink communication channel for communicating data over the second antenna,
wherein the second node is configured to receive data to be communicated by the first node in the first subset of channel resources,
and is further configured to communicate said received data in the first subset of channel resources to a user terminal when the user terminal is located within the second coverage area but outside the overlap area to extend the area available for a handover.

The invention thus provides for a system in which the area available for a handover procedure is extended with respect to the classical handover area defined by the overlap region of the coverage areas of the nodes. By means of extending the handover area, the time available for a handover procedure is prolonged. Because the user terminals in linear cellular networks move at a very high speed, the additional time gained through the system of the invention allows safer and more stable handover procedures than in the state of the art. Because the data transferred in these types of system may be critical to safety, the extension of the handover area prevents potentially disastrous accidents due to a loss of control data of vehicles such as trains, cars et cet. carrying the user terminals.

The invention utilizes the special layout of the splitting of the available frequency band among the channel resources, which is usually performed to minimize interferences between communications in the same channel resource by two neighbouring nodes. Without the need of additional frequency bands, the invention exploits channel resources which are usually not used by certain nodes in the system.

The extension of the handover area can be performed in two ways, one of which is by "mirroring" the data of the source node to the target node, wherein the terms "target" and "source" refer to the direction of the handover. In this case, the handover can be performed even after the user terminal has left the overlap area. Alternatively, the data of the target node can be "mirrored" to the source node to allow a handover even before the user terminal enters the overlap area.

Additionally, both of these cases can be combined. To this end, the first node is configured to receive data to be communicated by the second node in the second subset of channel resources, and is further configured to communicate said received data in the second subset of channel resources to a user terminal when it is located within the first coverage area but outside the overlap area to further extend the area available for a handover. Thereby, a doubly extended handover area is created, i.e., a handover procedure can be performed before and after the user terminal is located in the overlap area. This yields in an even longer time available for the handover, making the handovers in this system even more stable and secure.

To achieve an improved signal-to-noise ratio and thus an improved throughput over the overlap area, the first node is configured to receive data to be communicated by the second node in the second subset of channel resources, and both the first and the second node are configured to communicate said received data in the respective subset of channel resources to a user terminal when it is located within the overlap area. By means of this, the same data is communicated by the target node as well as the source node in the same channel resources, which enhances the throughput of the network.

To facilitate the transfer of the data from one node to the other, the second node is configured to receive data via a dual remote radio head, which feeds data to be communicated by the first node to the second antenna of the second node. Thereby, the two schedulers do not have to communicate with each other, which would cause a high latency in the system.

Preferably, the nodes of the system are configured to be operated according to the LTE (Long Term Evolution) standard. LTE is especially preferred in this case because its channel resources are orthogonal, meaning that the whole frequency and time plane of the communication channel can be split up into two orthogonal subsets, which is not possible in most other standards.

In a preferred embodiment, the second node communicates data in such a way as to not interfere with control channels of the first node. This results in an increased stability of the communication because the user terminal can receive the control channels from the first node even in the second subset without interference from the second node. Usually, the second node would broadcast its own data over these control channels, which would cause communications with the first node to be disturbed.

Further preferably, the two nodes are mutually synchronised at a subframe level. Thereby the nodes can employ identical PDCCH (Physical Downlink Control Channel) and PDSCH (Physical Downlink Shared Channel) boundaries. When the nodes are synchronised like this, the same LTE frame structure can be used for both nodes, which then also share the same communication channel layout, i.e., the PDCCH and the PDSCH structure will coincide for both nodes.

To balance Reference Signals, which are used in LTE to allow for a coherent demodulation in the user terminal, over the communication channels, i.e., to manage the Reference Signals such that the Reference Signals of the first node do not overlap with the Reference Signals of the second node, the first node has a first Physical Cell Identifier and the second node has a second Physical Cell Identifier, and the first Physical Cell Identifier modulo six equals three plus the second Physical Cell Identifier modulo six. Generally it is preferred that the control channels and Reference Signals of LTE are not interfered by control channels and Reference Signals broadcast by a neighbouring node.

In a further preferred embodiment of the invention, the system is configured to remove a Physical Control Format Indication Channel (PCFICH) and set a Physical Downlink Control Channel (PDCCH) area to a maximum value, and the first node is configured to indicate a Physical Control Format Indication Channel mode of operation to the user terminal in a Physical Broadcast Channel and in a System Information. This serves to unify the Physical Downlink Control Channel over both the first and the second node. Due to the fixed length of the PDCCH, the PCFICH becomes redundant. However, this mode should be indicated to the user terminal.

To align the Physical Hybrid Automatic Repeat Request Indication Channel (PHICH) broadcast by the first node with the one broadcast by the second node, an offset is communicated to the user terminal in spare bits of the Physical Broadcast Channel and confirmed in the System Information to indicate a location of a Physical Hybrid Automatic Repeat Request Indication Channel. Thereby, the user terminal can add the offset to the Physical Cell Identifier of the node it is located in to compute the location of the Physical Hybrid Automatic Repeat Request Indication Channel. This way, the Physical Hybrid Automatic Repeat Request Indication Channel does not actually have to be set to a new location.

Furthermore, the user specific search space has to be handled by both schedulers. Contrary to the case of some of the common channels, the resource elements in which grants for user terminals are communicated to the user terminals, the so-called common channel elements, are not predetermined since only present user terminals have to be considered by the scheduler/s. To solve this problem, the scheduler of the first node and the scheduler of the second node are each configured to handle grants of channel resources to user terminals in common channel elements lying in their respective subset of available channel resources. An effective way of handling allocation grants to user terminals is thus achieved without impacting the user terminal behaviour.

In another preferred embodiment of the invention, the system is configured to employ a synchronisation scheme such that the Physical Broadcast Channel of the first node does not align with the Physical Broadcast Channel of the second node, preferably in such a way that the subframe #0 of one first node corresponds to the subframe #5 of the second node. Thereby it is ensured that the Physical Broadcast Channels of the first and the second node do not overlap with each other without altering the structure of the communication channel.

The concept of the invention can also be applied to extend the handover area for the uplink communication channels. To this end, according to a second aspect the invention also provides for a system comprising a first and a second node of a linear cellular network, the first node having a first antenna for wirelessly communicating with a user terminal located within a first coverage area of the first node, and the second node having a second antenna for wirelessly communicating with a user terminal located within a second coverage area of the second node, wherein the first and the second coverage areas overlap partially to create an overlap area,
wherein both nodes are configured to communicate over an uplink communication channel having a plurality of channel resources,
wherein a scheduler of the first node is configured to allocate a third subset of all available channel resources of the uplink communication channel for communicating data over the first antenna, and
wherein a scheduler of the second node is configured to allocate a fourth subset comprising the remaining available channel resources of the uplink communication channel for communicating data over the second antenna,
wherein the second node is configured to receive data to be communicated to the first node in the third subset of channel resources from said user terminal when the user terminal is located within the second coverage area but outside the overlap area,
and is further configured to communicate said received data to the first node to extend the area available for a handover.

To further extend the handover area, preferably the first node is configured to receive data to be communicated to the second node in the fourth subset of channel resources from said user terminal when the user terminal is located within the first coverage area but outside the overlap area
and is further configured to communicate said received data to the second node to extend the area available for a handover.

To achieve a better throughput over the handover area, the first node is configured to receive data to be communicated to the second node in the fourth subset of channel resources from a user terminal when it is located within the overlap area, and
wherein the second node is configured to receive data to be communicated to the first node in the third subset of channel resources from said user terminal when it is located within the overlap area,
and both the first and the second node are configured to communicate said received data to the respective other node.

To minimize the latencies in the system, the second node is configured to receive said data via the second antenna and to communicate the received data via a dual remote radio head directly from the second antenna to the first node.

It is to be understood that the features of the first aspect of the invention can also be applied to the second aspect of the invention to obtain the specified advantages. Furthermore, the system of the first aspect can be combined with the system of the second aspect, such that the handover areas for downlink and for uplink can be extended at the same time between two nodes. Accordingly, the features of both aspects of the invention can be combined.

The invention shall now be explained in more detail below on the basis of preferred exemplary embodiments thereof with reference to the accompanying drawings, in which:
Fig. 1 shows a linear cellular network according to the invention in a schematic perspective view;
Fig. 2 shows an exemplary allocation of channel resources; and
Fig. 3 shows a connection of the nodes of the network of Fig. 1.

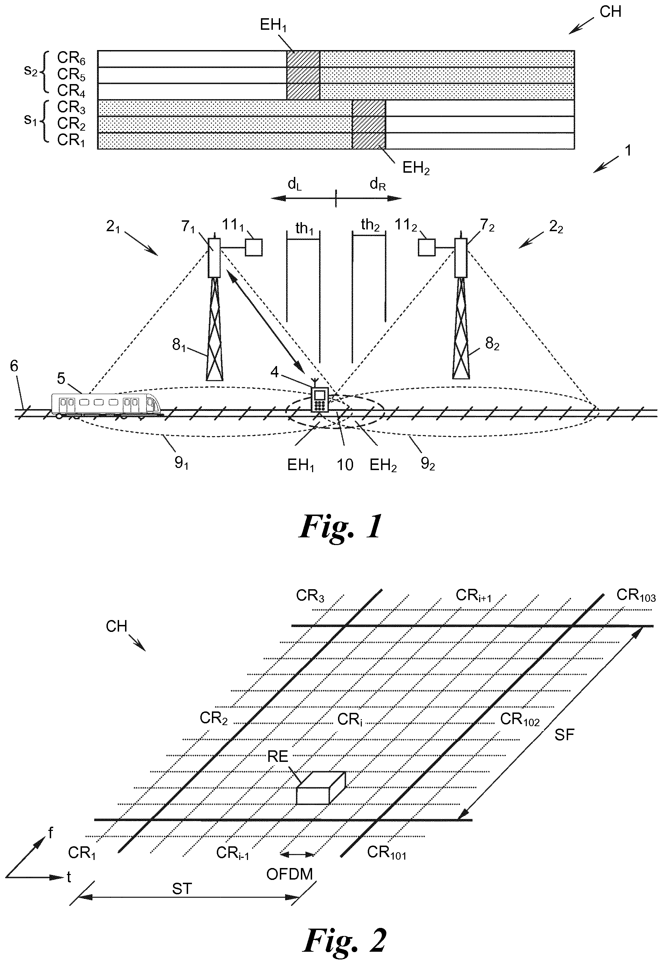

Fig. 1 shows a system 1 of nodes 2₁, 2₂, ... generally 2ₖ, of a conventional cellular network with a one-dimensional ("linear") cell topology. In this type of network, the nodes 2ₖ communicate data 3 with user terminals 4, which only travel in one direction d_{L} or the corresponding opposite direction d_{R}, e.g., by riding on a train 5 on a railway track 6, driving by car on a highway or in a tunnel, et cet.

Linear or one-dimensional means in this context that the nodes 2ₖ are arranged in a chain-like manner so that a user terminal 4 can move from one node 2ₖ to the next node 2ₖ₋₁ or 2ₖ₊₁ without interrupting communication. To this end, a first exemplary node 2₁ has an antenna 7₁ mounted on a support 8₁ and having a first coverage area 9₁, and a second exemplary node 2₂ has an antenna 7₂ mounted on a support 8₂ and having a second coverage area 9₂. The first coverage area 9₁ of the first node 2₁ partially overlaps with the second coverage area 9₂ of the second node 2₂ to create an overlap area 10, in which the user terminal 4 can be served by both nodes 2₁, 2₂.

The term "antenna" as used in the present patent specification designates both single and multiple physical antennas, i.e., also entire antenna systems comprising one or more physical transmit and/or receive antennas, as required.

The distance of the user terminal 4 to the node 2₁, 2₂, and thus also the entry of the user terminal 4 into the overlap area 10, can be determined by the received signal strength indication RSSI or by a timing advance TA value in the user terminal 4 and/or either or both of the closest nodes 2₁, 2₂.

The communication between the nodes 2₁, 2₂ and the user terminal 4 is conducted by communication standards known in the state of the art, such as 3GPP LTE/LTE-A or IEEE WiMAX 802.16e. In such communication standards, the communication channel CH of a node 2ₖ is divided in frequency f and/or time t into multiple channel resources CR₁, CR₂, ... generally CRᵢ. Fig. 2 shows an exemplary definition of the communication channel CH used by the nodes 2ₖ for communication. The channel CH is subdivided in frequency f into frequency bands SF and in time t into time slots ST; a combination of a frequency band SF and a time slot ST is called a channel resource CRᵢ. Of course, the communication channel CH could also be divided only in time t into time slots ST, such as in TDMA (time division multiple access) standards; or be divided only in frequency f into frequency bands SF, such as in FDMA (frequency division multiple access) standards. In LTE, a channel resource CRᵢ is called a "resource block" and carries six or seven OFDM symbols on 12 subcarriers, one subcarrier of one OFDM symbol representing a resource element RE of the resource block CRᵢ.

The channel structure shown in Fig. 2 can be employed for a downlink communication channel as well as for an uplink communication channel. Generally, a node 2ₖ can use both a downlink and an uplink communication channel CH, which may be separated in frequency. E.g., in the LTE standard, the downlink communication channel may use a frequency band of 852 - 862 MHz and the uplink communication channel a frequency band of 811 - 821 MHz. In the following, only the downlink communication channel will be described in detail, but all the teachings can be applied to the uplink communication channel in the same manner unless stated otherwise.

In the system 1 of Fig. 1, the nodes 2₁ and 2₂ each use orthogonal, i.e., non-overlapping, subsets s₁, s₂ of the downlink communication channel CH and orthogonal, i.e., non-overlapping, subsets s₃, s₄ of the uplink communication channel CH to prevent interference between the nodes 2₁, 2₂ over the same channel resource CRᵢ. To this end, the first node 2₁ has a first scheduler 11₁ and the second node 2₂ has a second scheduler 11₂, which only assign grants for communicating data 3 to user terminals 4 in their respective subset s₁, s₂. In the example shown in the top section of Fig. 1, the first scheduler 11₁ of the first node 2₁ allocates the first three channel resources CR₁, CR₂, CR₃ as the first subset s₁ for communication over the first antenna 7₁, and the second scheduler 11₂ of the second node 2₂ allocates the second three channel resources CR₄, CR₅, CR₆ as the second subset s₂ for communication over the second antenna 7₂. It can be seen that the user terminal 4 has all channel resources CR₁ - CR₆ available for communication in the overlap area 10.

To transition from the coverage area 9₁ of the first node 2₁ ("source node") to the coverage area 9₂ of the second node 2₂ ("target node"), a handover can thus be performed in the overlap area 10. To this end, a user terminal 4 can cease communications with the first node 2₁ over channel resources CRᵢ in the first subset s₁ and establish new communications with the second node 2₂ over channel resources CRᵢ in the second subset s₂. The handover procedure takes a certain amount of time and has to be initiated and finished while the user terminal can communicate with both nodes 2₁, 2₂ simultaneously.

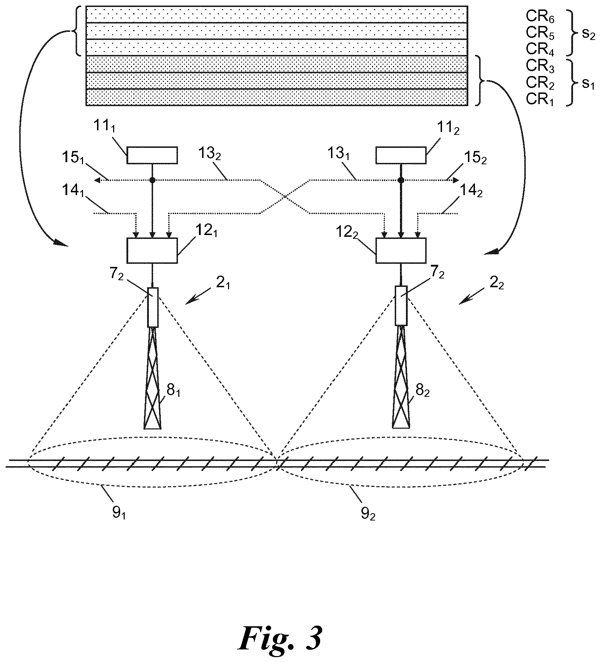

To extend the area available for a handover, Fig. 3 shows a dual radio head 12₁ of the first node 2₁ and a dual radio head 12₂ of the second node 2₂. By means of the dual radio heads 12₁, 12₂, the nodes 2₁, 2₂ can receive data to be communicated by the respective other node 2₂, 2₁ in their assigned subset s₂, s₁. To this end, the first radio head 12₁ is connected to the second node 2₂ via a link 13₁ and the second radio head 12₂ is connected to the first node 2₂ via a link 13₂. The dual radio heads 12₁, 12₁ directly feed data to be communicated to the respective antenna 7₁, 7₂ of their own node such that the schedulers 12₁, 12₂ do not have to directly communicate with each other, which would cause a high latency in the system 1.

By means of the data 3 received from a neighbouring node 2ₖ, it is possible to extend the area available for a handover in two directions, which can be seen by the shaded areas EH₁, EH₂ of the communication channel CH in Fig. 1. To extend the area in the direction of the second node 2₂, i.e., to prolong the time during which a handover can be performed when the first node 2₁ is the source node and the second node 2₂ is the target node, the second node 2₂ communicates the received data 3 in the first subset s₁, which is usually only used by the first node 2₁, to a user terminal 4 when the user terminal 4 is located within the second coverage area 9₂ but outside the overlap area 10, i.e., in the extended handover area EH₂, to extend the area available for handover. Additionally, an arbitrary threshold th₂ can be set such that the area available for handover is limited to a distance of th₂ from the overlap area 10.

The area available for handover can also be extended in the other direction, i.e., in the direction of the source node, in this example the first node 2₁. To this end, the first node 2₁ communicates the received data 3 in the second subset s₂, which is usually only used by the second node 2₂, to a user terminal 4 when the user terminal 4 is located within the first coverage area 9₁ but outside the overlap area 10, i.e., in the extended handover area EH₁, to extend the area available for handover. Again, an arbitrary threshold th₁ can be set to limit the area available for handover to a distance of th₁ from the overlap area 10. It can be seen that the thresholds th₁, th₂ define the extended handover areas EH₁ and EH₂, see Fig. 1.

Again, the distance of the user terminal 4 to the node 2₁, 2₂, and thus also the presence of the user terminal 4 within the extended handover area EH₁, EH₂, can be determined by the received signal strength indication RSSI or by a timing advance TA value in user terminal 4 and/or either or both of the closest nodes 2₁, 2₂.

The dual radio heads 12₁, 12₂ can also be used to improve the throughput of data 3 to and from the user terminal 4 when both nodes 2₁, 2₂ communicate the received data 3 in the respective subset s₁, s₂ to a user terminal located within the overlap area 10. This way, the user terminal 4 receives the data 3 twice, once from the first node 2₁ and once from the second node 2₂, which improves the signal-to-noise ratio and increases the throughput.

It is understood that the linkage of neighbouring nodes 2₁, 2₂ can extend to an arbitrary number of nodes 2ₖ, such that the radio head 12₁, 12₂ can be connected to two neighbouring nodes 2ₖ₋₁, 2ₖ₊₁, as can be seen in Fig. 3 for each node 2₁, 2₂. To this end, the first radio head 12₁ receives data 3 from the second node 2₂ via the link 13₁ and from a neighbouring node (not shown) left of the first node 2₁ in Fig. 3 via a link 14₁ and supplies data 3 to this neighbouring node via a link 15₁. The same applies to the second radio head 12₂ of the second node, which thus has the link 13₂ connected to the first node 2₁ and links 14₂ and 15₂ connected to a further neighbouring node (not shown). In such a way, the described system 1 using the extended handover schemes can be extended to arbitrary lengths.

For the uplink, the system applies this scheme in the same manner but in a "reverse" or "backwards" order, i.e., the second node 2₂ receives data 3 to be communicated to the first node 2₁ in the third subset s₃ of channel resources CRᵢ from said user terminal 4 when the user terminal 4 is located within the second coverage area 9₂ but outside the overlap area 10 and then communicates said received data 3 to the first node 2₁ to extend the area available for a handover.

As mentioned above with respect to Fig. 2, the nodes 2ₖ of the system can be operated according to the LTE standard. In this case, the communication channel used by any two neighbouring nodes is a full bandwidth of LTE uplink or downlink. As known to the skilled person, LTE uses a variety of common and shared channels (described below), which have predefined positions in frequency and/or time. One embodiment to make the proposed splitting of the communication channel CH in orthogonal subsets s₁, s₂ compatible with the predefined channel structures is described below. It is also emphasized that the communication of data 3 means - above and below - the communication of individual data, e.g., transmitted in the PDSCH (Physical Downlink Shared Channel) or PUSCH (Physical Uplink Shared Channel), and only if necessary content of, for example, control channels, which can be communicated by the nodes 2ₖ over the whole communication channel CH.

For the uplink communication channel, there are no problems, since the traffic area (PUSCH) is strictly orthogonal. For downlink, the implementation of the extension of the handover area as above is not straight-forward, but arising issues are solved with the embodiment described below.

The first issue that arises is that in LTE certain control channels have fixed positions, i.e., the first node 2₁ cannot freely assign all of its control channels within the subset s₁ in which it is supposed to communicate its data 3 when the user terminal 4 is located within its extended handover area EH₁. To solve this issue, the neighbouring node 2₂ communicates data 3 (to a different user terminal 4) in such a way as to not interfere the control channels of the first node 2₁. Otherwise, a user terminal 4 in the overlap area 10, for which the handover is to be performed, would not be able to correctly receive the control channels of its source node 2₁.

A further issue arises when two neighbouring nodes broadcast control channels with a differing content. For example, each of the node broadcasts Reference Signals, which should mutually not overlap. The location of the Reference Signals (RS) is dependent on the PCI (Physical Cell Identifier) of the respective cell or node. In this embodiment, the PCI of the first node 2₁ modulo six equals three plus the PCI of the second node 2₂ modulo six, which yields non-overlapping RS.

A control channel used in LTE is PCFICH (Physical Control Format Indication Channel), which is common to all user terminals 4 for one node 2ₖ. The PCFICH indicates the size of the PDCCH (Physical Downlink Control Channel) area, which itself carries the assignments for data 3 to be transferred. The mapping of the PCFICH on the communication channel depends on the PCI (Physical Cell Identifier), which itself depends on the individual node 2ₖ. However, the location of the PCFICH is required to be identical for two neighbouring nodes 2ₖ, such that in this embodiment the PCFICH is removed and the PDCCH area is fixed, e.g., set to its maximum value. To this end, the PCFICH mode of operation is signalled to the user terminals 4 in the PBCH channel (see below) as well as in the SI (System Information) .

The PHICH (Physical Hybrid Automatic Repeat Request Indication Channel) indicates to a user terminal 4 that the node 2ₖ correctly received uplink data. It is desired to have the same PHICH location for neighbouring nodes 2ₖ. However, the location of the PHICH is dependent on the PCI of the respective node 2ₖ. To indicate to a user terminal that the location of the PHICH is different than the usual location, a PHICH Offset parameter is communicated to the user terminal 4.

The PDCCH (Physical Downlink Control Channel) indicates the resource allocations for downlink to user terminals 4. To this end, the PDCCH uses common channel elements (CCEs), which are usually associated to a user specific search space freely distributed over the whole bandwidth of the communication. To solve this, this embodiment can use one of two options: Firstly, the schedulers 11₁, 11₂ each handle grants of channel resources CRᵢ to user terminals 4 only in CCEs lying in their respective subset s₁, s₂ of available channel resources CRᵢ. In this option, not all CCE combinations are available due to the partitioning of all available channel resources CRᵢ. Secondly, the schedulers 11₁, 11₂ can generate their own user specific search space on the virtual constraint that only half of the amount of CCEs is available in total, i.e., the schedulers 11₁, 11₂ both determine CCE combinations as if the total bandwidth were i/2, wherein i is the actual total number of channel resources CRᵢ. Then, one of the schedulers 11₁, 11₂ applies an offset of i/2 to the CCE combinations that are generated. Thus, all CCE combinations are possible while in the first option CCE combinations are "cut" apart. In this option, the user terminal 4 has to be made aware of this offset, which can be indicated in the common channels.

A common channel used in LTE, i.e., common for all user terminals 4 within the node 2₁, is PBCH (Physical Broadcast Channel), which broadcasts parameters essential for the initial access to the cell or node. For example, PBCH broadcasts the actual downlink system bandwidth. PBCH is always located at a fixed position of the communication channel CH. To achieve that the PBCH broadcasts of neighbouring nodes 2ₖ do not collide, this embodiment employs a synchronisation scheme such that the PBCH of one node 2ₖ does not align with the PBCH of the neighbouring nodes 2ₖ₊₁, 2ₖ₋₁, e.g., in such a way that the subframe #0 of one node 2ₖ corresponds to the subframe #5 of the neighbouring nodes 2ₖ₊₁, 2ₖ₋₁.

In the above-mentioned subframe alignment, the PSS (Primary Synchronisation Signals) and SSS (Secondary Synchronisation Signals) of neighbouring nodes still overlap. However, this is not a problem for a user terminal 4 that wants to synchronise with its closest node 2ₖ.

For the PDSCH mentioned above, this embodiment uses a transmission according to LTE Release 11 on subframes #1, #2, #3, #6, #7, and #8, wherein transmission is performed according to LTE Release 8 on subframes #0, #4, #5, and #9.

The invention is not restricted to the specific embodiments described in detail herein but encompasses all variants, combinations and modifications thereof that fall within the framework of the appended claims.

## Claims

1. System comprising a first and a second node (2₁, 2₂) of a linear cellular network, the first node (2₁) having a first antenna (7₁) for wirelessly communicating with a user terminal (4) located within a first coverage area (9₁) of the first node (2₁), and the second node (2₂) having a second antenna (7₂) for wirelessly communicating with a user terminal (4) located within a second coverage area (9₂) of the second node (2₂), wherein the first and the second coverage areas (9₁, 9₂) overlap partially to create an overlap area (10),
wherein both nodes (2₁, 2₂) are configured to communicate with the user terminal (4) over a downlink communication channel (CH) having a plurality of channel resources (CRᵢ),
wherein a scheduler (11₁) of the first node (2₁) is configured to allocate a first subset (s₁) of all available channel resources (CRᵢ) of the downlink communication channel (CH) for communicating data (3) over the first antenna (7₁), and
wherein a scheduler (11₂) of the second node (2₂) is configured to allocate a second subset (s₂) comprising the remaining available channel resources (CRᵢ) of the downlink communication channel (CH) for communicating data (3) over the second antenna (7₂) ,
wherein the second node (2₂) is configured to receive data (3) to be communicated by the first node (2₁) in the first subset (s₁) of channel resources (CRᵢ) ,
and is further configured to communicate said received data (3) in the first subset (s₁) of channel resources (CRᵢ) to a user terminal (4) when the user terminal (4) is located within the second coverage area (9₂) but outside the overlap area (10) to extend the area available for a handover.

2. System according to claim 1, wherein the first node (2₁) is configured to receive data (3) to be communicated by the second node (2₂) in the second subset (s₂) of channel resources (CRᵢ),
and is further configured to communicate said received data (3) in the second subset (s₂) of channel resources (CRᵢ) to a user terminal (4) when it is located within the first coverage area (9₁) but outside the overlap area (10) to further extend the area available for a handover.

3. System according to claim 1 or 2, wherein the first node (2₁) is configured to receive data (3) to be communicated by the second node (2₂) in the second subset (s₂) of channel resources (CRᵢ),
and both the first and the second node (2₁, 2₂) are configured to communicate said received data (3) in the respective subset (s₁, s₂) of channel resources (CRᵢ) to a user terminal when it is located within the overlap area (10).

4. System according to any one of the claims 1 to 3, wherein
the second node (2₂) is configured to receive data (3) via a dual remote radio head (12₂), which feeds data (3) to be communicated by the first node (2₁) to the second antenna (7₂) of the second node (2₂).

5. System according to any one of the claims 1 to 4, wherein the nodes (2₁, 2₂) of the system (1) are configured to be operated according to the LTE standard.

6. System according to claim 5, wherein the second node (2₂) is configured to communicate data (3) in such a way as to not interfere control channels of the first node (2₁).

7. System according to claim 5 or 6, wherein the two nodes (2₁, 2₂) are mutually synchronised at a subframe level.

8. System according to any one of the claims 5 to 7, wherein the first node (2₁) has a first Physical Cell Identifier and the second node (2₂) has a second Physical Cell Identifier, and
wherein the first Physical Cell Identifier modulo six equals three plus the second Physical Cell Identifier modulo six.

9. System according to any one of the claims 5 to 8, wherein the system (1) is configured to remove a Physical Control Format Indication Channel and set a Physical Downlink Control Channel area to a maximum value, and
wherein the first node (2₁) is configured to indicate a Physical Control Format Indication Channel mode of operation to the user terminal (4) in a Physical Broadcast Channel and in a System Information.

10. System according to any one of the claims 5 to 9, wherein an offset is communicated to the user terminal (4) in spare bits of the Physical Broadcast Channel and confirmed in the System Information to indicate a location of a Physical Hybrid Automatic Repeat Request Indication Channel.

11. System according to any one of the claims 5 to 10, wherein the scheduler (11₁) of the first node (2₁) and the scheduler (11₂) of the second node (2₂) are each configured to handle grants of channel resources (CRᵢ) to user terminals (4) in common channel elements lying in their respective subset of available channel resources (CRᵢ).

12. System according to any one of the claims 5 to 11, wherein the system (1) is configured to employ a synchronisation scheme such that the Physical Broadcast Channel of the first node (2₁) does not align with the Physical Broadcast Channel of the second node (2₂), preferably in such a way that the subframe #0 of one first node (2₁) corresponds to the subframe #5 of the second node (2₂).

13. System according to any one of the claims 1 to 12, wherein both nodes (2₁, 2₂) are further configured to communicate with the user terminal (4) over an uplink communication channel (CH) having a plurality of channel resources (CRᵢ) ,wherein the scheduler (11₁) of the first node (2₁) is configured to allocate a third subset (s₃) of all available channel resources (CRᵢ) of the uplink communication channel (CH) for communicating data (3) over the first antenna (7₁), and
wherein the scheduler (11₂) of the second node (2₂) is configured to allocate a fourth subset (s₄) comprising the remaining available channel resources (CRᵢ) of the uplink communication channel (CH) for communicating data (3) over the second antenna (7₂),
wherein the second node (2₂) is configured to receive data (3) to be communicated to the first node (2₁) in the third subset (s₃) of channel resources (CRᵢ) from said user terminal (4) when the user terminal (4) is located within the second coverage area (9₂) but outside the overlap area (10)
and is further configured to communicate said received data (3) to the first node (2₁) to extend the area available for a handover.

14. System comprising a first and a second node (2₁, 2₂) of a linear cellular network, the first node (2₁) having a first antenna (7₁) for wirelessly communicating with a user terminal (4) located within a first coverage area (9₁) of the first node (2₁), and the second node (2₂) having a second antenna (7₂) for wirelessly communicating with a user terminal (4) located within a second coverage area (9₂) of the second node (2₂), wherein the first and the second coverage areas (9₁, 9₂) overlap partially to create an overlap area (10),
wherein both nodes (2₁, 2₂) are configured to communicate with the user terminal (4) over an uplink communication channel (CH) having a plurality of channel resources (CRᵢ),
wherein a scheduler (11₁) of the first node (2₁) is configured to allocate a third subset (s₃) of all available channel resources (CRᵢ) of the uplink communication channel (CH) for communicating data (3) over the first antenna (7₁), and
wherein a scheduler (11₂) of the second node (2₂) is configured to allocate a fourth subset (s₄) comprising the remaining available channel resources (CRᵢ) of the uplink communication channel (CH) for communicating data (3) over the second antenna (7₂) ,
wherein the second node (2₂) is configured to receive data (3) to be communicated to the first node (2₁) in the third subset (s₃) of channel resources (CRᵢ) from said user terminal (4) when the user terminal (4) is located within the second coverage area (9₂) but outside the overlap area (10)
and is further configured to communicate said received data (3) to the first node (2₁) to extend the area available for a handover.

15. System according to claim 14, wherein the first node (2₁) is configured to receive data (3) to be communicated to the second node (2₂) in the fourth subset (s₄) of channel resources (CRᵢ) from said user terminal (4) when the user terminal (4) is located within the first coverage area (9₁) but outside the overlap area (10)
and is further configured to communicate said received data (3) to the second node (2₂) to extend the area available for a handover.

16. System according to claim 14 or 15, wherein the first node (2₁) is configured to receive data (3) to be communicated to the second node (2₂) in the fourth subset (s₄) of channel resources (CRᵢ) from a user terminal (4) when it is located within the overlap area (10), and
wherein the second node (2₂) is configured to receive data (3) to be communicated to the first node (2₁) in the third subset (s₃) of channel resources (CRᵢ) from said user terminal (4) when it is located within the overlap area (10),
and both the first and the second node (2₁, 2₂) are configured to communicate said received data (3) to the respective other node (2₁, 2₂).

17. System according to any one of the claims 14 to 16, wherein the second node (2₂) is configured to receive said data (3) via the second antenna (7₂) and to communicate the received data (3) via a dual remote radio head (12₂) directly from the second antenna (7₂) to the first node (2₁) .

## Patentansprüche

1. System umfassend einen ersten und einen zweiten Knoten (2₁, 2₂) eines linearen zellulären Netzwerks, wobei der erste Knoten (2₁) eine ersten Antenne (7₁) zur drahtlosen Kommunikation mit einem Benutzerterminal (4) hat, welches sich in einem ersten Abdeckungsbereich (9₁) des ersten Knotens (1) befindet, und der zweite Knoten (2₂) eine zweite Antenne (7₂) zur drahtlosen Kommunikation mit einem Benutzerterminal (4) hat, welches sich in einem zweiten Abdeckungsbereich (9₂) des zweiten Knotens (2₂) befindet, wobei die ersten und zweiten Abdeckungsbereiche (9₁, 9₂) sich teilweise überlappen, um einen Überlappungsbereich (10) zu erzeugen,
wobei beide Knoten (2₁, 2₂) dazu ausgebildet sind, mit dem Benutzerterminal (4) über einen Downlink-Kommunikationskanal (CH) zu kommunizieren, welcher eine Vielzahl von Kanalresourcen (CRᵢ) hat,
wobei ein Scheduler (11₁) des ersten Knotens (2₁) dazu ausgebildet ist, eine erste Teilmenge (s₁) aller verfügbaren Kanalressourcen (CRᵢ) des Downlink-Kommunikationskanals (CH) zum Kommunizieren von Daten (3) über die erste Antenne (7₁) zuzuteilen, und
wobei ein Scheduler (11₂) des zweiten Knotens (2₂) dazu ausgebildet ist, eine zweite Teilmenge (s₂) umfassend die übrigen verfügbaren Kanalressourcen (CRᵢ) des Downlink-Kommunikationskanals (CH) zum Kommunizieren von Daten (3) über die zweite Antenne (7₂) zuzuteilen,
wobei der zweite Konten (2₂) dazu ausgebildet ist, Daten (3) zu empfangen, welche vom ersten Knoten (2₁) in der ersten Teilmenge (s₁) von Kanalressourcen (CRᵢ) zu kommunizieren sind,
und ferner dazu ausgebildet ist, diese empfangenen Daten (3) in der ersten Teilmenge (s₁) von Kanalressourcen (CRᵢ) an ein Benutzerterminal (4) zu kommunizieren, wenn das Benutzerterminal (4) sich innerhalb des zweiten Abdeckungsbereiches (9₂), aber außerhalb des Überlappungsbereiches (10) befindet, um den für ein Handover verfügbaren Bereich zu erweitern.

2. System nach Anspruch 1, wobei der erste Knoten (2₁) dazu ausgebildet ist, Daten (3) zu empfangen, welche vom zweiten Knoten (2₂) in der zweiten Teilmenge (s₂) von Kanalressourcen (CRᵢ) zu kommunizieren sind,
und ferner dazu ausgebildet ist, diese empfangenen Daten (3) in der zweiten Teilmenge (s₂) von Kanalressourcen (CRᵢ) an ein Benutzerterminal (4) zu kommunizieren, wenn es sich innerhalb des ersten Abdeckungsbereiches (9₁), aber außerhalb des Überlappungsbereiches (10) befindet, um den für ein Handover verfügbaren Bereich ferner zu erweitern.

3. System nach Anspruch 1 oder 2, wobei der erste Knoten (2₁) dazu ausgebildet ist, Daten (3) zu empfangen, welche vom zweiten Knoten (2₂) in der zweiten Teilmenge (s₂) von Kanalressourcen (CRᵢ) zu kommunizieren sind,
und sowohl der erste als auch der zweite Knoten (2₁, 2₂) dazu ausgebildet ist, die empfangenen Daten (3) in der jeweiligen Teilmenge (s₁, s₂) von Kanalressourcen (CRᵢ) an ein Benutzerterminal zu kommunizieren, wenn dieses sich innerhalb des Überlappungsbereiches (10) befindet.

4. System nach einem der Ansprüche 1 bis 3, wobei der zweite Knoten (2₂) dazu ausgebildet ist, Daten (3) über einen dualen Remote Radio Head (12₂) zu empfangen, welcher Daten (3) einspeist, die vom ersten Knoten (2₁) an die zweite Antenne (7₂) des zweiten Knotens (2₂) zu kommunizieren sind.

5. System nach einem der Ansprüche 1 bis 4, wobei die Knoten (2₁, 2₂) des Systems (1) dazu ausgebildet sind, nach einem LTE-Standard betrieben zu werden.

6. System nach Anspruch 5, wobei der zweite Knoten (2₂) dazu ausgebildet ist, Daten (3) so zu kommunizieren, dass sie nicht mit den Steuerkanälen des ersten Knotens (2₁) interferieren.

7. System nach Anspruch 5 oder 6, wobei die zwei Knoten (2₁, 2₂) untereinander auf einer Subframe-Ebene synchronisiert sind.

8. System nach einem der Ansprüche 5 bis 7, wobei der erste Knoten (2₁) einen ersten Physical Cell Identifier und der zweite Knoten (2₂) einen zweiten Physical Cell Identifier hat, und
wobei der erste Physical Cell Identifier modulo sechs gleich drei plus dem zweiten Physcial Cell Identifier modulo sechs ist.

9. System nach einem der Ansprüche 5 bis 8, wobei das System (1) dazu ausgebildet ist, einen Physical Control Format Indication Channel zu entfernen und einen Physical Downlink Control Channel-Bereich auf einen maximalen Wert zu setzen, und
wobei der erste Knoten (2₁) dazu ausgebildet ist, dem Benutzerterminal (4) eine Physical Control Format Indication Channel-Betriebsart in einem Physical Broadcast Channel und in einer System Information anzugeben.

10. System nach einem der Ansprüche 5 bis 9, wobei ein Offset an das Benutzerterminal (4) in überzähligen Bits des Physical Broadcast Channels kommuniziert und in der System Information bestätigt wird, um die Lage eines Physical Hybrid Automatic Repeat Request Indication Channels anzugeben.

11. System nach einem der Ansprüche 5 bis 10, wobei der Scheduler (11₁) des ersten Knotens (2₁) und der Scheduler (11₂) des zweiten Knotens (2₂) jeweils dazu ausgebildet sind, Zuteilungen von Kanalressourcen (CRᵢ) an Benutzerterminals (4) in gemeinsamen Kanalelementen zu bearbeiten, welche in ihrer jeweiligen Teilmenge von verfügbaren Kanalressourcen (CRᵢ) liegen.

12. System nach einem der Ansprüche 5 bis 11, wobei das System (1) dazu ausgebildet ist, ein Synchronisationsschema anzuwenden, so dass der Physical Broadcast Channel des ersten Knotens (2₁) nicht mit dem Physical Broadcast Channel des zweiten Knotens (2₂) ausgerichtet ist, vorzugsweise derart, dass der Subframe #0 eines ersten Knotens (2₁) mit dem Subframe #5 des zweiten Knotens (2₂) übereinstimmt.

13. System nach einem der Ansprüche 1 bis 12, wobei beide Knoten (2₁, 2₂) ferner dazu ausgebildet sind, mit dem Benutzerterminal (4) über einen Uplink-Kommunikationskanal (CH) zu kommunizieren, welcher eine Vielzahl von Kanalressourcen (CRᵢ) hat,
wobei der Scheduler (11₁) des ersten Knotens (2₁) dazu ausgebildet ist, eine dritte Teilmenge (s₃) aller verfügbaren Kanalressourcen (CRᵢ) des Uplink-Kommunikationskanals (CH) zum Kommunizieren von Daten (3) über die erste Antenne (7₁) zuzuteilen, und
wobei der Scheduler (11₂) des zweiten Knotens (2₂) dazu ausgebildet ist, eine vierte Teilmenge (s₄) umfassend die übrigen verfügbaren Kanalressourcen (CRᵢ) des Uplink-Kommunikationskanals (CR) zum Kommunizieren von Daten (3) über die zweite Antenne (7₂) zuzuteilen,
wobei der zweite Knoten (2₂) dazu ausgebildet ist, Daten (3), welche an den ersten Knoten (2₁) in der dritten Teilmenge (s₃) von Kanalressourcen (CRᵢ) zu kommunizieren sind, von dem genannten Benutzerterminal (4) zu empfangen, wenn das Benutzerterminal (4) sich innerhalb des zweiten Abdeckungsbereiches (9₂), aber außerhalb des Überlappungsbereiches (10) befindet, und ferner dazu ausgebildet ist, diese empfangenen Daten (3) an den ersten Knoten (2₁) zu kommunizieren, um den für ein Handover verfügbaren Bereich zu erweitern.

14. System umfassend einen ersten und einen zweiten Knoten (2₁, 2₂) eines linearen zellulären Netzwerks, wobei der erste Knoten (2₁) eine erste Antenne (7₁) zur drahtlosen Kommunikation mit einem Benutzerterminal (4) hat, welches sich innerhalb eines ersten Abdeckungsbereiches (9₁) des ersten Knotens (2₁) befindet, und der zweite Knoten (2₂) eine zweite Antenne (7₂) zur drahtlosen Kommunikation mit einem Benutzerterminal (4) hat, welches sich innerhalb eines zweiten Abdeckungsbereiches (9₂) des zweiten Knotens (2₂) befindet, wobei die ersten und die zweiten Abdeckungsbereiche (9₁, 9₂) sich teilweise überlappen, um einen Überlappungsbereich (10) zu erzeugen,
wobei beide Knoten (2₁, 2₂) dazu ausgebildet sind, mit dem Benutzerterminal (4) über einen Uplink-Kommunikationskanal (CH) zu kommunizieren, der eine Vielzahl von Kanalressourcen (CRᵢ) hat,
wobei ein Scheduler (11₁) des ersten Knotens (2₁) dazu ausgebildet ist, eine dritte Teilmenge (s₃) aller verfügbaren Kanalressourcen (CRᵢ) des Uplink-Kommunikationskanals (CH) zum Kommunizieren von Daten (3) über die erste Antenne (7₁) zuzuteilen, und
wobei ein Scheduler (11₂) des zweiten Knotens (2₂) dazu ausgebildet ist, eine vierte Teilmenge (s₄) umfassend die übrigen verfügbaren Kanalressourcen (CRᵢ) des Uplink-Kommunikationskanals (CH) zum Kommunizieren von Daten (3) über die zweite Antenne (7₂) zuzuteilen,
wobei der zweite Knoten (2₂) dazu ausgebildet ist, Daten (3), welche an den ersten Knoten (2₁) in der dritten Teilmenge (s₃) von Kanalressourcen (CRᵢ) zu kommunizieren sind, von dem genannten Benutzerterminal (4) zu empfangen, wenn das Benutzerterminal (4) sich innerhalb des zweiten Abdeckungsbereiches (9₂), aber außerhalb des Überlappungsbereiches (10) befindet und ferner dazu ausgebildet ist, diese empfangenen Daten (3) an den ersten Knoten (2₁) zu kommunizieren, um den für ein Handover verfügbaren Bereich zu erweitern.

15. System nach Anspruch 14, wobei der erste Knoten (2₁) dazu ausgebildet ist, Daten (3), welche an den zweiten Knoten (2₂) in der vierten Teilmenge (s₄) von Kanalressourcen (CRᵢ) zu kommunizieren sind, von dem genannten Benutzerterminal (4) zu empfangen, wenn das Benutzerterminal (4) sich innerhalb des ersten Abdeckungsbereiches (9₁), aber außerhalb des Überlappungsbereiches (10) befindet
und ferner dazu ausgebildet ist, diese empfangenen Daten (3) an den zweiten Knoten (2₂) zu kommunizieren, um den für ein Handover verfügbaren Bereich zu erweitern.

16. System nach Anspruch 14 oder 15, wobei der erste Knoten (2₁) dazu ausgebildet ist, Daten (3), die an den zweiten Knoten (2₂) in der vierten Teilmenge (s₄) von Kanalressourcen (CRᵢ) zu kommunizieren sind, von einem Benutzerterminal (4) zu empfangen, wenn dieses sich innerhalb des Überlappungsbereiches (10) befindet, und
wobei der zweite Knoten (2₂) dazu ausgebildet ist, Daten (3), welche an den ersten Knoten (2₁) in der dritten Teilmenge (s₃) von Kanalressourcen (CRᵢ) zu kommunizieren sind, von dem genannten Benutzerterminal (4) zu empfangen, wenn dieses sich innerhalb des Überlappungsbereiches (10) befindet,
und sowohl der erste als auch der zweite Knoten (2₁, 2₂) dazu ausgebildet ist, die genannten empfangenen Daten (3) an den jeweils anderen Knoten (2₁, 2₂) zu kommunizieren.

17. System nach einem der Ansprüche 14 bis 16, wobei der zweite Knoten (2₂) dazu ausgebildet ist, die genannten Daten (3) über die Antenne (7₂) zu empfangen und die empfangenen Daten (3) über einen dualen Remote Radio Head (12₂) direkt von der zweiten Antenne (7₂) an den ersten Knoten (2₁) zu kommunizieren.

## Revendications

1. Système comprenant un premier et un deuxième nœud (2₁, 2₂) d'un réseau cellulaire linéaire, le premier nœud (2₁) ayant une première antenne (7₁) pour communiquer sans fil avec un terminal d'utilisateur (4) situé dans une première zone de couverture (9₁) du premier nœud (2₁), et le deuxième nœud (2₂) ayant une deuxième antenne (7₂) pour communiquer sans fil avec un terminal d'utilisateur (4) situé dans une deuxième zone de couverture (9₂) du deuxième nœud (2₂), où les première et deuxième zones de couverture (9₁, 9₂) se superposent partiellement pour créer une zone de superposition (10),
dans lequel les deux nœuds (2₁, 2₂) sont conçus pour communiquer avec le terminal d'utilisateur (4) par un canal de communication en liaison descendante (CH) ayant une pluralité de ressources de canal (CRᵢ),
dans lequel un ordonnanceur (11₁) du premier nœud (2₁) est conçu pour allouer un premier sous-ensemble (s₁) de toutes les ressources de canal disponibles (CRᵢ) du canal de communication en liaison descendante (CH) pour communiquer des données (3) par la première antenne (7₁), et
dans lequel un ordonnanceur (11₂) du deuxième nœud (2₂) est conçu pour allouer un deuxième sous-ensemble (s₂) comprenant les ressources de canal disponibles (CRᵢ) restantes du canal de communication en liaison descendante (CH) pour communiquer des données (3) par la deuxième antenne (7₂),
dans lequel le deuxième nœud (2₂) est conçu pour recevoir des données (3) devant être communiquées par le premier nœud (2₁) dans le premier sous-ensemble (s₁) de ressources de canal (CRᵢ) ,
et est en outre conçu pour communiquer lesdites données (3) reçues dans le premier sous-ensemble (s₁) de ressources de canal (CRᵢ) à un terminal d'utilisateur (4) lorsque le terminal d'utilisateur (4) est situé dans la deuxième zone de couverture (9₂), mais à l'extérieur de la zone de superposition (10) afin d'étendre la zone disponible pour un transfert.

2. Système selon la revendication 1, dans lequel le premier nœud (2₁) est conçu pour recevoir des données (3) devant être communiquées par le deuxième nœud (2₂) dans le deuxième sous-ensemble (s₂) de ressources de canal (CRᵢ),
et est en outre configuré pour communiquer lesdites données (3) reçues dans le deuxième sous-ensemble (s₂) de ressources de canal (CRᵢ) à un terminal d'utilisateur (4) lorsqu'il est situé dans la première zone de couverture (9₁), mais à l'extérieur de la zone de superposition (10) pour étendre davantage la zone disponible pour un transfert.

3. Système selon la revendication 1 ou 2, dans lequel le premier nœud (2₁) est conçu pour recevoir des données (3) devant être communiquées par le deuxième nœud (2₂) dans le deuxième sous-ensemble (s₂) de ressources de canal (CRᵢ),
et le premier ainsi que le deuxième nœud (2₁, 2₂) est conçu pour communiquer lesdites données (3) reçues dans le sous-ensemble (s₁, s₂) respectif de ressources de canal (CRᵢ) à un terminal d'utilisateur lorsqu'il est situé dans la zone de superposition (10).

4. Système selon l'une quelconque des revendications 1 à 3, dans lequel
le deuxième nœud (2₂) est conçu pour recevoir des données (3) par le biais d'un Remote Radio Head dual (12₂), qui alimente des données (3) devant être communiquées par le premier nœud (2₁) à la deuxième antenne (7₂) du deuxième nœud (2₂) .

5. Système selon l'une quelconque des revendications 1 à 4, dans lequel les nœuds (2₁, 2₂) du système (1) sont conçus pour fonctionner selon la norme LTE.

6. Système selon la revendication 5, dans lequel le deuxième nœud (2₂) est conçu pour communiquer des données (3) d'une telle manière qu'elles n'interfèrent pas avec des canaux de commande du premier nœud (2₁).

7. Système selon la revendication 5 ou 6, dans lequel les deux nœuds (2₁, 2₂) sont mutuellement synchronisés sur un niveau de sous-trame.

8. Système selon l'une quelconque des revendications 5 à 7, dans lequel le premier nœud (2₁) a un premier Physical Cell Identifier et le deuxième nœud (2₂) a un deuxième Physical Cell Identifier, et
dans lequel le premier Physical Cell Identifier modulo six est égal à trois plus le deuxième Physical Cell Identifier modulo six.

9. Système selon l'une quelconque des revendications 5 à 8, où le système (1) est conçu pour enlever un Physical Control Format Indication Channel et fixer une zone Physical Downlink Control Channel à une valeur maximale, et
dans lequel le premier nœud (2₁) est conçu pour indiquer un mode de fonctionnement d'un Physical Control Format Indication Channel au terminal d'utilisateur (4) dans un Physical Broadcast Channel et dans une System Information.

10. Système selon l'une quelconque des revendications 5 à 9, dans lequel un décalage est communiqué au terminal d'utilisateur (4) en bits de réserve du Physical Broadcast Channel et est confirmé dans la System Information afin d'indiquer une localisation d'un Physical Hybrid Automatic Repeat Request Indication Channel.

11. Système selon l'une quelconque des revendications 5 à 10, dans lequel l'ordonnanceur (11₁) du premier nœud (2₁) et l'ordonnanceur (11₂) du deuxième nœud (2₂) sont chacun conçus pour gérer des allocations de ressources de canal (CRᵢ) à des terminaux d'utilisateurs (4) en éléments de canal communs se situant dans leur sous-ensemble respectif de ressources de canal (CRᵢ) disponibles.

12. Système selon l'une quelconque des revendications 5 à 11, où le système (1) est conçu pour employer un schéma de synchronisation de sorte que le Physical Broadcast Channel du premier nœud (2₁) ne s'aligne pas avec le Physical Braodcast Channel du deuxième nœud (2₂), de préférence de telle manière que la sous-trame #0 du premier nœud (2₁) corresponde à la sous-trame #5 du deuxième nœud (2₂).

13. Système selon l'une quelconque des revendications 1 à 12, dans lequel les deux nœuds (2₁, 2₂) sont en outre conçus pour communiquer avec le terminal d'utilisateur (4) par un canal de communication en liaison montante (CH) ayant une pluralité de ressources de canal (CRᵢ),
dans lequel l'ordonnanceur (11₁) du premier nœud (2₁) est conçu pour allouer un troisième sous-ensemble (s₃) de toutes les ressources de canal (CRᵢ) disponibles du canal de communication en liaison montante (CH) pour communiquer des données (3) par la première antenne (7₁), et
dans lequel l'ordonnanceur (11₂) du deuxième nœud (2₂) est conçu pour allouer un quatrième sous-ensemble (s₄) comprenant les ressources de canal (CRᵢ) disponibles restantes du canal de communication en liaison montante (CH) pour communiquer des données (3) par la deuxième antenne (7₂),
dans lequel le deuxième nœud (2₂) est conçu pour recevoir des données (3) devant être communiquées au premier nœud (2₁) dans la troisième sous-ensemble (s₃) de ressources de canal (CRᵢ) à partir dudit terminal d'utilisateur (4) lorsque le terminal d'utilisateur (4) est situé dans la deuxième zone de couverture (9₂), mais à l'extérieur de la zone de superposition (10),
et est en outre conçu pour communiquer lesdites données (3) reçues au premier nœud (2₁) pour étendre la zone disponible pour un transfert.

14. Système comprenant un premier et un deuxième nœud (2₁, 2₂) d'un réseau cellulaire linéaire, le premier nœud (2₁) ayant une première antenne (7₁) pour communiquer sans fil avec un terminal d'utilisateur (4) situé dans une première zone de couverture (9₁) du premier nœud (2₁), et le deuxième nœud (2₂) ayant une deuxième antenne (7₂) pour communiquer sans fil avec un terminal d'utilisateur (4) situé dans une deuxième zone de couverture (9₂) du deuxième nœud (2₂), où les première et deuxième zones de couverture (9₁, 9₂) se superposent partiellement pour créer une zone de superposition (10),
dans lequel les deux nœuds (2₁, 2₂) sont conçus pour communiquer avec le terminal d'utilisateur (4) par un canal de communication en liaison montante (CH) ayant une pluralité de ressources de canal (CRᵢ),
dans lequel un ordonnanceur (11₁) du premier nœud (2₁) est conçu pour allouer un troisième sous-ensemble (s₃) de toutes les ressources de canal disponibles (CRᵢ) du canal de communication en liaison montante (CH) pour communiquer des données (3) par la première antenne (7₁), et
dans lequel un ordonnanceur (11₂) du deuxième nœud (2₂) est conçu pour allouer un quatrième sous-ensemble (s₄) comprenant les ressources de canal disponibles (CRᵢ) restantes du canal de communication en liaison montante (CH) pour communiquer des données (3) par la deuxième antenne (7₂),
dans lequel le deuxième nœud (2₂) est conçu pour recevoir des données (3) devant être communiquées au premier nœud (2₁) dans le troisième sous-ensemble (s₃) de ressources de canal (CRᵢ) à partir dudit terminal d'utilisateur (4) lorsque le terminal d'utilisateur (4) est situé dans la deuxième zone de couverture (9₂), mais à l'extérieur de la zone de superposition (10),
et est en outre conçu pour communiquer lesdites données (3) reçues au premier nœud (2₁) afin d'étendre la zone disponible pour un transfert.

15. Système selon la revendication 14, dans lequel le premier nœud (2₁) est conçu pour recevoir des données (3) devant être communiquées au deuxième nœud (2₂) dans le quatrième sous-ensemble (s₄) de ressources de canal (CRᵢ) à partir dudit terminal d'utilisateur (4) lorsque le terminal d'utilisateur (4) est situé dans la première zone de couverture (9₁), mais à l'extérieur de la zone de superposition (10),
et est en outre configuré pour communiquer lesdites données (3) reçues au deuxième nœud (2₂) pour étendre la zone disponible pour un transfert.

16. Système selon la revendication 14 ou 15, dans lequel le premier nœud (2₁) est conçu pour recevoir des données (3) devant être communiquées au deuxième nœud (2₂) dans le quatrième sous-ensemble (s₄) de ressources de canal (CRᵢ) à partir d'un terminal d'utilisateur (4) lorsqu'il est situé dans la zone de superposition (10), et
dans lequel le deuxième nœud (2₂) est conçu pour recevoir des données (3) devant être communiquées au premier nœud (2₁) dans le troisième sous-ensemble (s₃) de ressources de canal (CRᵢ) à partir dudit terminal d'utilisateur (4) lorsqu'il est situé dans la zone de superposition (10),
et le premier ainsi que le deuxième nœud (2₁, 2₂) est conçu pour communiquer lesdites données (3) reçus à l'autre nœud (2₁, 2₂) respectif.

17. Système selon l'une quelconque des revendications 14 à 16, dans lequel le deuxième nœud (2₂) est conçu pour recevoir lesdites données (3) par le biais de la deuxième antenne (7₂) et pour communiquer les données (3) reçues par le biais d'un Remote Radio Head (12₂) dual directement à partir de la deuxième antenne (7₂) au premier nœud (2₁) .
